# EUROPEAN PATENT APPLICATION

(11) **EP 3 486 792 A1**
(43) Date of publication of application: **22.05.2019**
(21) Application number: 17202858.1
(22) Date of filing: 21.11.2017
(51) Int. Cl.: G06F 13/38

(54) **CIRCUIT, SYSTEM, DEVICE AND METHOD FOR TRANSMITTING A UART DATA SIGNAL AND A USB DATA SIGNAL**

(71) Applicant: Vestel Elektronik Sanayi ve Ticaret A.S., 45030 Manisa (TR)
(72) Inventor: ÖZEN, Özhan, 45030 Manisa (TR); YILAR, Coskun, 45030 Manisa (TR); SENGÜZEL, Ísmail, 45030 Manisa (TR)
(74) Representative: Martinez, Olivier Gildas

(57) **Abstract**

A circuit (6) for transmitting a UART data signal and a USB data signal comprises a first connector (24) configured to simultaneously receive a UART data signal and a first USB signal data signal. The circuit (6) comprises a second connector (30) configured to transmit the first USB data signal. The circuit (6) comprises a UART to USB bridge (32) configured to convert the UART data signal into a second USB data signal. The circuit (6) comprises a third connector (34) configured to transmit the second USB data signal.

## Description

### Technical Field

The present disclosure relates to a circuit, a system, a device and a method for transmitting a Universal Asynchronous Receiver Transmitter (UART) data signal and a Universal Serial Bus (USB) data signal.

### Background

Most end user devices (e.g. mobile phones, tablet computers, video game consoles, Global Positioning Systems, smart watches, etc.) comprise a processing unit and one or more peripherals (e.g. display, keyboard, speaker, etc.). The processing unit and the peripherals include UARTs to manage asynchronous serial communication.

In operation, the UART of the processing unit receives parallel streams of bits, converts these parallel streams of bits into a serial stream of bits and transmits the serial stream of bits to the UART of a peripheral. The transmission is performed over a TxD line of a UART cable connecting a TxD pin of a UART connector (e.g. RS-232) of the processing unit to a RxD pin of a UART connector (e.g. RS-232) of the peripheral. In response, the UART of the peripheral converts the serial stream of bits into parallel streams of bits and process the parallel streams of bits.

A challenge for engineers is to read out UART data signals and monitor UART logs transmitted by the processing unit to the peripheral so as to diagnose issues (i.e. to perform debugging) during design or maintenance.

Most end user devices are not equipped with UART pin header connectors and therefore end user devices cannot be directly connected with monitoring devices (e.g. desktop computer, laptop computer, etc.) via UART cables to read out the UART data signal. Engineers have to disassemble the end user devices and manually solder a UART cable to the processing unit or the peripherals. This operation is time consuming and may cause irreversible damage, and may void manufacturer warranties.

### Summary

According to a first aspect disclosed herein, there is provided a circuit for transmitting a Universal Asynchronous Receiver Transmitter, UART, data signal and a Universal Serial Bus, USB, data signal, the circuit comprising:
a first connector configured to simultaneously receive a UART data signal and a first USB signal data signal;
a second connector configured to transmit the first USB data signal;
a UART to USB bridge configured to convert the UART data signal into a second USB data signal; and
a third connector configured to transmit the second USB data signal.

In one implementation, the circuit may operate as an interface between an end user device under test (e.g. a mobile phone, a tablet computer, a video game console, a Global Positioning System, a smart watch, etc.) and a monitoring device (e.g. a desktop computer, a laptop computer, etc.).

The end user device under test may be connected to the circuit via the first connector and the monitoring device may be connected to the circuit via the second and third connectors. In this way, the monitoring device may receive data from the end user device under test via data lines (Data -, Data +) of a first USB cable conveying the first USB data signal whilst monitoring the UART logs via data lines (Data -, Data +) of a second USB cable conveying the second USB data signal.

Alternatively, the monitoring device may charge the end user device under test via data lines (Data -, Data +) of a first USB cable conveying the first USB data signal whilst monitoring UART logs via data lines (Data -, Data +) of a second USB cable conveying the second USB data signal.

In another implementation, the circuit may operate as an interface between an end user device under test (a mobile phone, tablet computer, a video game console, a Global Positioning System, a smart watch, etc.), a monitoring device (e.g. desktop computer, a laptop computer, etc.) and a separate charging device (e.g. wall charger, desktop computer, a laptop computer, etc.).

The end user device under test may be connected to the circuit via the first connector, the charging device may be connected to the circuit via the second connector and the monitoring device may be connected to the circuit via the third connector. In this way, the charging device may charge the device under test data lines (Data -, Data +) of a first USB cable conveying the first USB data signal whilst the monitoring device may monitor UART logs via data lines (Data -, Data +) of a second USB cable conveying the second USB data signal.

Accordingly, the circuit enables the monitoring of UART logs from an end user device under test whilst charging the end user device under test and/or receiving data from the end user device under test.

The first connector of the circuit may be a USB connector and comprises data pins (Data -, Data +) for receiving the first USB data signal over data lines (Data -, Data +) of a first USB cable and Side Band Use, SBU, pins (SBU1, SBU2) for receiving UART data signal over SBU lines (SBU1, SBU2) of the first USB cable.

The first connector of the circuit may be a USB-C connector.

The second connector of the circuit may be a USB connector comprising data pins (Data -, Data +) for transmitting the first USB data signal over data lines (Data -, Data +) of a second USB cable. The data pins of the first connector of the circuit may then be connected to the data pins of the second connector of the circuit.

The second connector of the circuit may be a micro USB connector.

The third connector of the circuit may a USB connector comprising data pins (Data -, Data +) for transmitting the second USB data signal over data lines (Data -, Data +) of a third USB cable.

The third connector of the circuit may a micro USB connector.

The circuit may comprise a fourth connector configured to transmit the UART data signal.

The fourth connector of the circuit is a pin header UART connector comprising reception and transmission pins (RxD, TxD) for transmitting the UART data signal over reception and transmission lines (RxD, TxD) of a UART cable.

According to a second aspect disclosed herein, there is provided a system comprising:
a circuit for transmitting a Universal Asynchronous Receiver Transmitter, UART, data signal and a Universal Serial Bus, USB, data signal, the circuit comprising a first connector configured to simultaneously receive a UART data signal and a first USB data signal, a second connector configured to transmit the first USB data signal; a UART to USB bridge configured to convert the UART data signal into second USB data signal, and a third connector configured to transmit the second USB data signal;
a device comprising a processing unit configured to provide the UART data signal and the first USB data signal, and a first connector configured to simultaneously transmit the UART data signals and the first USB data signal; and
a cable connecting the first connector of the circuit to the first connector of the device.

The first connector of the circuit may be a USB connector and may comprise data pins (Data -, Data +) for receiving the first USB data signal over data lines (Data -, Data +) of the cable and Side Band Use, SBU, pins (SBU1, SBU2) for receiving the UART data signal over SBU lines (SBU1, SBU2) of the cable ;
wherein the first connector of the device is a USB connector; and
wherein the cable is a USB cable.

The first connector of the circuit may be a USB-C connector, the first connector of the device may be a USB-C connector and the cable may be a USB-C to USB-C cable.

The cable may comprise SBU lines (SBU1, SBU2) connecting the SBU pins (SBU1, SBU2) of the first connector of the circuit to the SBU pins (SBU1, SBU2) of the first connector of the device.

According to a third aspect disclosed herein, there is provided a device comprising:
a processing unit configured to provide a Universal Asynchronous Receiver Transmitter, UART, data signal and a first Universal Serial Bus, USB, data signal; and
a first connector configured to simultaneously transmit the UART data signal and the first USB data signal.

The device may be for example a mobile or smart phone, a tablet computer, a video game console, a Global Positioning System, a smart watch, etc.

According to a fourth aspect disclosed herein, there is provided a method for transmitting a Universal Asynchronous Receiver Transmitter, UART, data signal and a Universal Serial Bus, USB, data signal, the method comprising:
simultaneously receiving UART data signal and first USB data signal;
transmitting the first USB data signal;
converting the UART data signal into second USB data signal; and
transmitting the second USB data signal.

### Brief Description of the Drawings

To assist understanding of the present disclosure and to show how embodiments may be put into effect, reference is made by way of example to the accompanying drawings in which:
Figure 1 shows schematically an example of a system according to an embodiment disclosed herein;
Figure 2 shows schematically an example of a male USB C connector;
Figure 3 shows schematically an example of a circuit design of a female USB C connector in a circuit according to an embodiment disclosed herein;
Figure 4 shows schematically an example of a male UART connector;
Figure 5 shows schematically an example of a circuit design of a male UART pin head connector in a circuit according to an embodiment disclosed herein;
Figure 6 shows schematically an example of a circuit design of a female USB micro B connector in a circuit according to an embodiment disclosed herein;
Figure 7 shows schematically an example of a circuit design of a UART to USB bridge in a circuit according to an embodiment disclosed herein;
Figure 8 shows schematically an example of a circuit design of a female USB micro B connector in a circuit according to an embodiment disclosed herein;
Figure 9 shows schematically an example of a male USB micro B connector;
Figure 10 shows schematically an example of a male USB A connector;

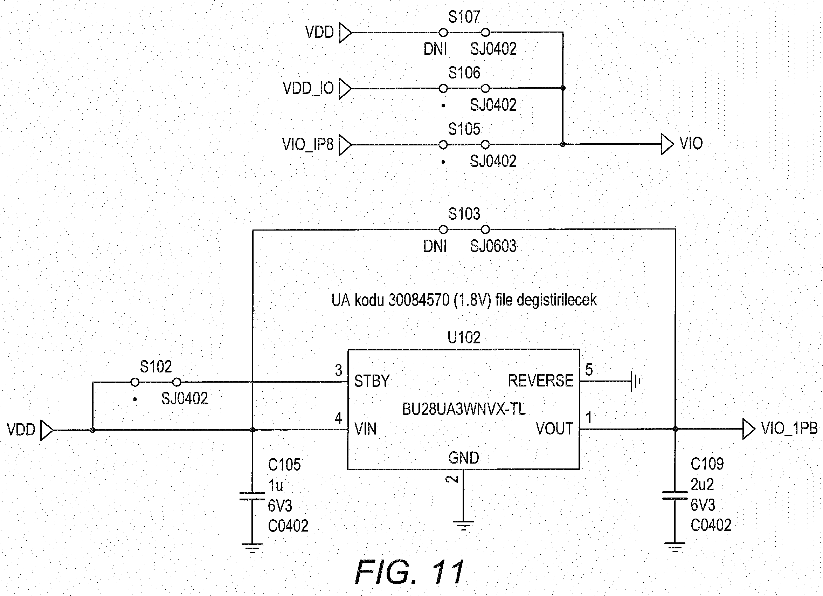

Figure 11 shows schematically an example of a circuit design of a low dropout regulator in a circuit according to an embodiment disclosed herein;
Figure 12 shows schematically an example of a system according to an embodiment disclosed herein; and
Figure 13 schematically a flow diagram of an example of a method of operating a circuit according to an embodiment disclosed herein.

### Detailed Description

Most end user devices are equipped with USB connectors. Accordingly, it has been proposed to transmit a UART data signal using the data pins Data - and Data + of the USB connector as a data pin TxD of a UART connector. In this way, a monitoring device, which is also equipped with a USB connector, can be connected to the end user device via a USB cable and can read out UART logs.

An issue with this implementation is that whilst the USB connector of the end user device transmits the converted USB data signal, the USB connector of the end user device is "corrupted". That is, the USB connector cannot be used to transmit other USB data signals. As a result, the USB connector cannot be used to charge the end user device or to transfer data.

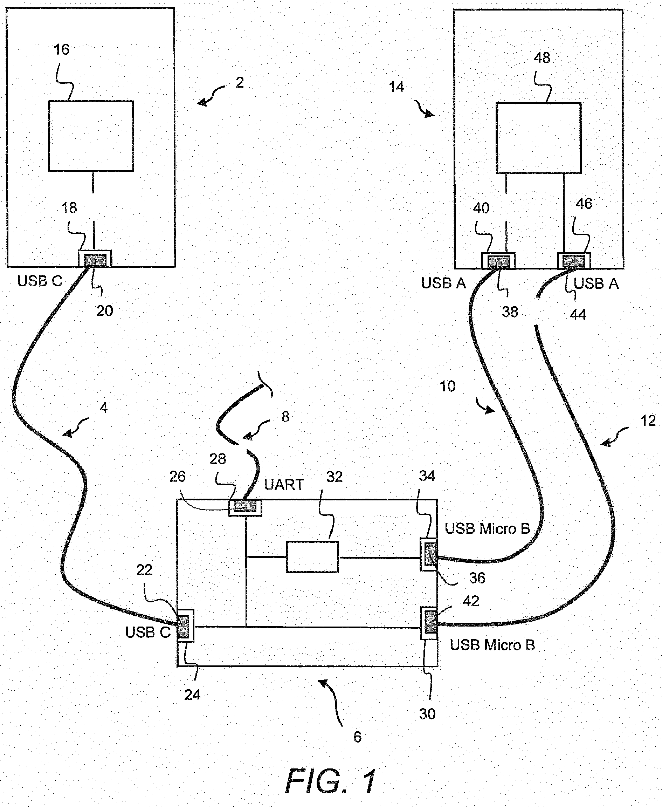

Figure 1 shows schematically an example of a system according to an embodiment. The system comprises an end user device 2 (also referred as device under test or DUT), a USB cable 4, a circuit 6, a UART cable 8, a USB cable 10, a USB cable 12 and a monitoring device 14.

The end user device 2 may be for example a mobile or smart phone, a tablet computer, a video game console, a Global Positioning System, a smart watch, etc.

The end user device 2 comprises a processing unit 16 configured to provide a UART data signal and a USB data signal.

The end user device 2 comprises a USB C female connector 18 configured to simultaneously transmit the UART data signal and the USB data signal provided by the processing unit 16. The USB C female connector 18 includes a Data + pin, a Data - pin, a SBU 1 pin and a SBU2 pin.

The Data + pin of the USB C female connector 18 is used as a conventional USB Data + pin. The Data - pin of the USB C female connector 18 is used as a conventional USB Data - pin. However, the SBU1 pin of the USB C female connector is used as a UART RxD pin. The SBU2 pin of the USB C female connector is used as a UART TxD pin.

In this way, a USB data signal may be provided by the processing unit 16 to the Data + and Data - pins of the USB C female connector 18. A UART data signal may be provided by the processing unit 16 to the SBU2 pin of the USB C female connector 18.

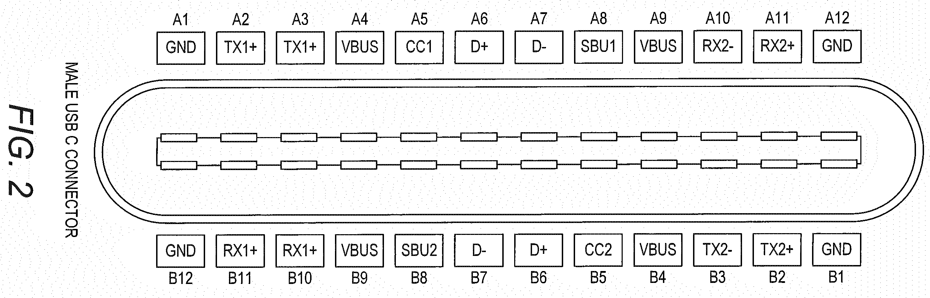

The USB cable 4 is a USB C to USB C cable. The USB cable 4 comprises USB C male connectors 20 and 22 (shown in Figure 2). The USB C male connector 20 is plugged into the USB C female connector 18 of the end user device 2. The USB C male connector 22 is plugged into a USB C female connector 24 of the circuit 6.

The USB C male connectors 20 and 22 each comprise a Data + pin, a Data - pin, a SBU 1 pin and a SBU2 pin. The USB cable 4 comprises a Data + line connecting the Data + pins of the USB C male connectors 20 and 22. The USB cable comprises a Data - line connecting the Data - pins of the USB C male connectors 20 and 22. The USB cable comprises a SBU1 line connecting the SBU1 pins of the USB C male connectors 20 and 22. The USB cable comprises a SBU2 line connecting the SBU2 pins of the USB C male connectors 20 and 22.

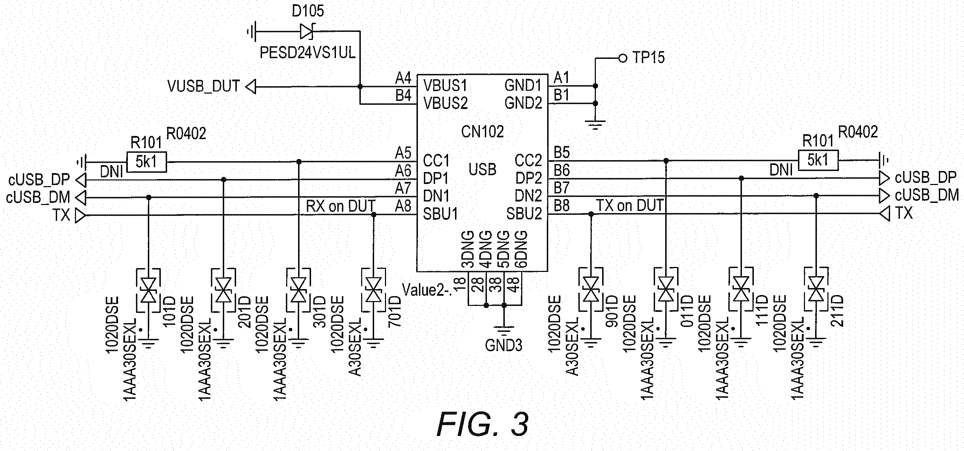

The circuit 6 comprises the USB C female connector 24 (shown in Figure 3) configured to simultaneously receive the UART data signal and the USB data signal provided by the processing unit 16 of the end user device 2. The USB C female connector 24 comprises a Data + pin, a Data - pin, a SBU 1 pin and a SBU2 pin.

The Data + pin of the USB C female connector 24 is used as a conventional USB Data + pin. The Data - pin of the USB C female connector 24 is used as a conventional USB Data - pin. However, the SBU1 pin of the USB C female connector 24 is used as a UART TxD pin. The SBU2 pin of the USB C female connector is used as a UART RxD pin.

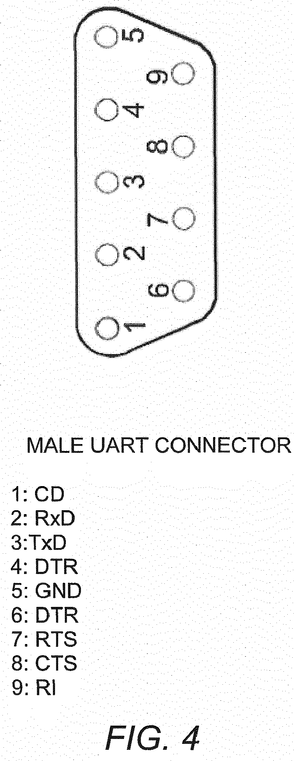

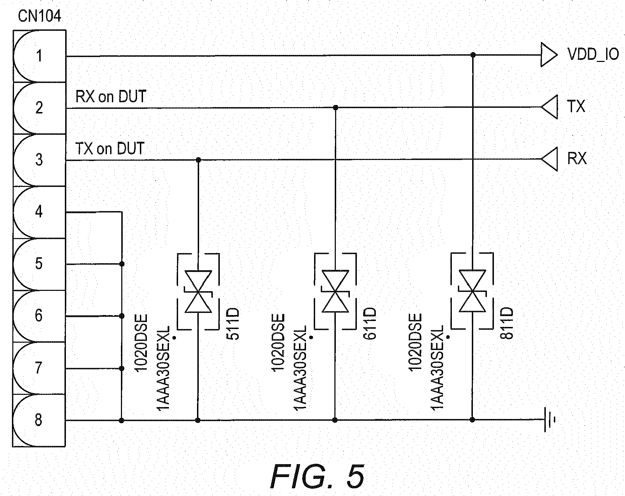

The circuit 6 comprises a UART male connector 26 (shown in Figure 4 and Figure 5) to provide the UART data signal received by the USB C female connector of the circuit via its SBU2 pin (which is used as a UART RxD pin). The UART male connector 26 may be a pin header connector. The UART male connector 26 comprises a TxD pin and a RxD pin. The TxD pin of the UART male connector 26 is connected to the SBU1 pin of the USB C female connector 24. The RxD pin of the UART male connector 26 is connected to the SBU2 pin of the USB C female connector 24 of the circuit 6.

The UART cable 8 comprises a UART female connector 28. The UART female connector 28 comprises a TxD pin and a RxD pin. The UART male connector 26 of the circuit 6 is plugged into the UART female connector 28 of the UART cable 8.

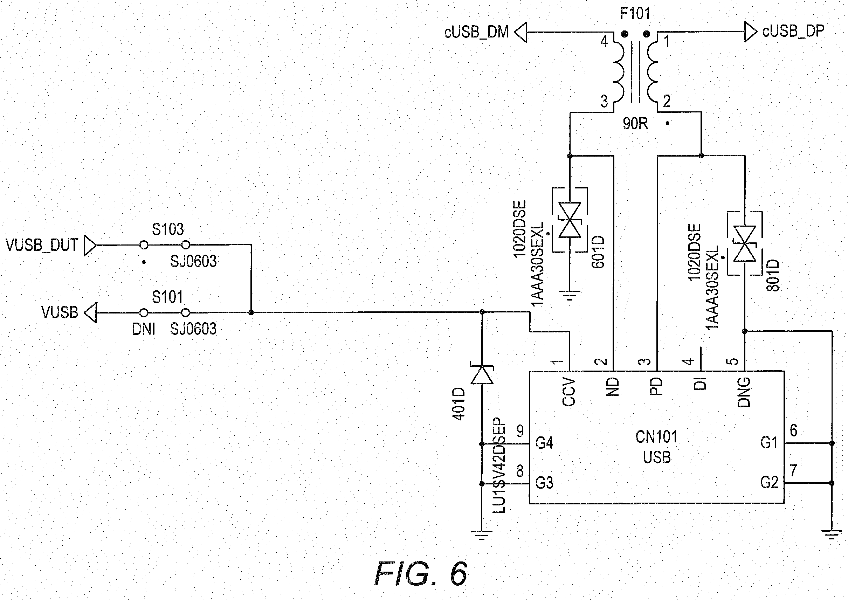

The circuit 6 comprises a USB female micro B connector 30 (shown in Figure 6) to transmit the USB data signal provided by the processing unit 16 of the end user device 2 and received by the USB C female connector of the circuit via its Data + pin and Data - pin. The USB female micro B connector 30 comprises a Data + pin and a Data - pin. The Data + pin of the USB female micro B connector 30 of the circuit 6 is connected to the Data + pin of the USB C female connector 24 of the circuit 6. The Data - pin of the USB micro B female connector 30 is connected to the Data - pin of the USB C female connector 24 of the circuit 6.

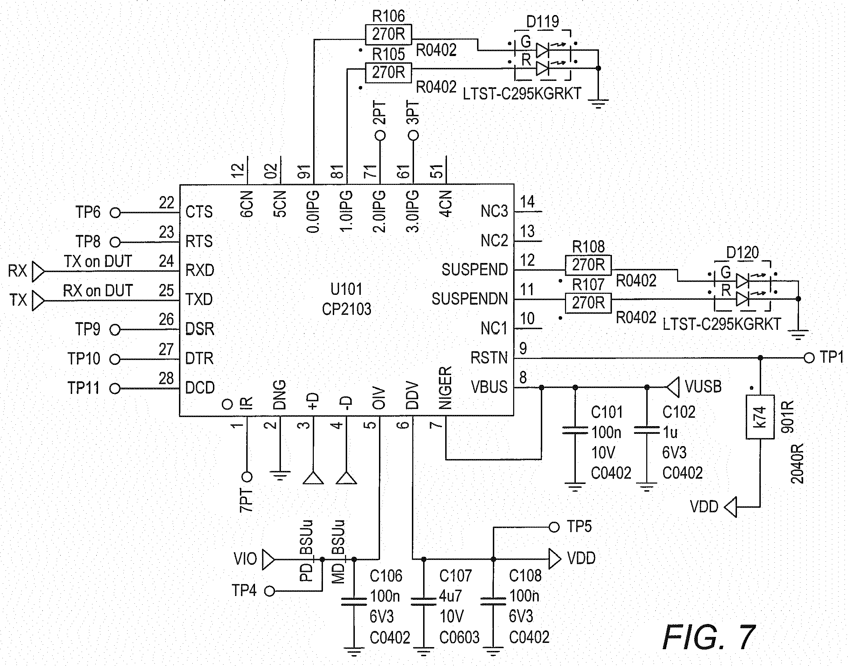

The circuit 6 comprises a UART to USB bridge 32 (shown in Figure 7) to convert the UART signal provided by the processing unit 16 of the end user device 2 and received by the USB C female connector 24 of the circuit via its SBU2 pin (which is used as a UART RxD pin) into a USB signal. The UART to USB bridge 32 comprises a RxD pin, a TxD pin, a Data + pin and a Data - pin.

The RxD pin of the UART to USB bridge 32 is connected to the SBU2 of the USB C female connector 24 of the circuit 6. The TxD pin of the UART to USB bridge 32 is connected to the SBU1 of the USB C female connector 24 of the circuit 6. The converted USB data signal is output on the Data + pin and a Data - pin of the UART to USB bridge 32.

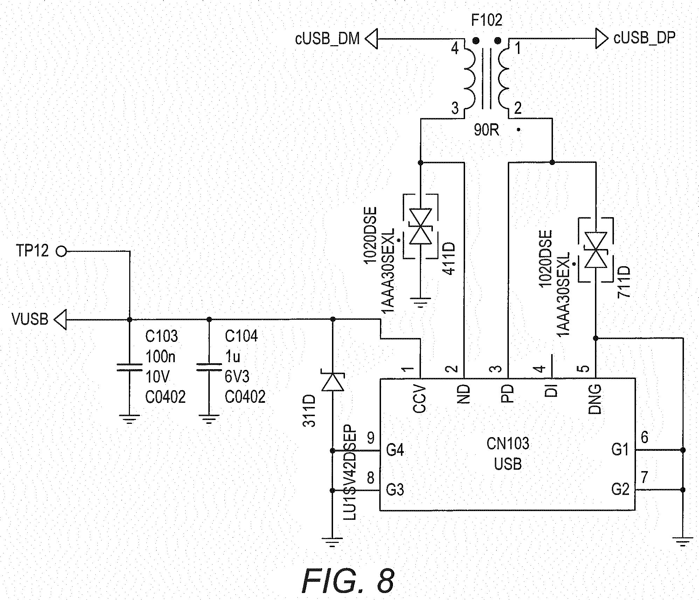

The circuit 6 comprises a USB female micro B connector 34 (shown in Figure 8) to transmit the USB data signal converted by the UART to USB bridge 32 and output on its Data + pin and a Data - pin. The USB female micro B 34 comprises a Data + pin and a Data - pin. The Data + pin of the USB female micro B connector 34 is connected to the Data + pin of the UART to USB bridge 32. The Data - pin of the USB female micro B connector 34 is connected to the Data - pin of the UART to USB bridge 32.

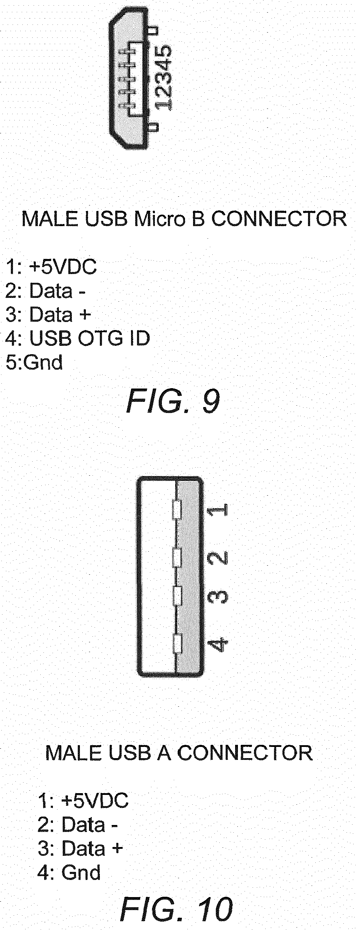

The USB cable 10 is a USB micro B to USB A cable. The USB cable 10 comprises a USB micro B male connector 36 (shown in Figure 8) and a USB A male connector 38 (shown in Figure 9). The USB micro B male connector 36 of the cable 10 is plugged into the USB micro B female connector 34 of the circuit 6. The USB A male connector 38 of the cable is plugged into a USB A female connector 40 of the monitoring device 14.

The USB micro B male connector 36 of the cable 10 comprises a Data + pin and a Data - pin. The USB A male connector 38 of the cable comprises a Data + pin and a Data - pin. The USB cable 10 comprises a Data + line connecting the Data + pins of the USB micro B male connector 36 and the USB A male connector 38. The USB cable comprises a Data - line connecting the Data - pins of the USB micro B male connector 36 and the USB A male connector 38.

Likewise, the USB cable 12 is a USB micro B to USB A cable. The USB cable 12 comprises a USB micro B male connector 42 (shown in Figure 9) and a USB A male connector 44 (shown in Figure 10). The USB micro B male connector 42 of the cable 12 is plugged into the USB micro B female connector 30 of the circuit 6. The USB A male connector 44 of the cable 12 is plugged into a USB A female connector 46 of the monitoring device 14.

The USB micro B male connector 42 of the cable 12 comprises a Data + pin and a Data - pin. The USB A male connector 44 of the cable 12 comprises a Data + pin and a Data - pin. The USB cable 12 comprises a Data + line connecting the Data + pins of the USB micro B male connector 42 and the USB A male connector 44. The USB cable 12 comprises a Data - line connecting the Data - pins of the USB micro B male connector 42 and the USB A male connector 44.

The monitoring device 14 comprises the USB A male connector 40 configured to receive the UART data signal provided by the processing unit 16 of end user device 2, received by the USB C female connector 24 of the circuit 6, converted into a USB data signal by the UART to USB bridge 32 and transferred to the USB micro B female connector 34 of the circuit 6. The USB A female connector 40 includes a Data + pin and a Data - pin.

The monitoring device 14 comprises the USB A male connector 46 configured to receive the USB data signal provided by the by the processing unit 16 of end user device 2, received by the USB C female connector 24 of the circuit 6 and transferred to the USB micro B female connector 30 of the circuit 6. The USB A female connector 46 includes a Data + pin and a Data - pin.

The monitoring device 14 comprises a processing unit 48 to process the converted USB data signal received by the USB A female connector 40 and the USB data signal received by the USB A female connector 46.

An advantage of the system shown in Figure 1 is that the monitoring device 14 may receive data via data lines Data - and Data + of the USB cable 12 whilst monitoring UART logs via data lines Data - and Data + of the USB cable 10.

Alternatively, the monitoring device 14 may charge the end user device 2 via data lines Data - and Data + of the USB 12 cable whilst monitoring UART logs via data lines Data - and Data + of the USB cable 10.

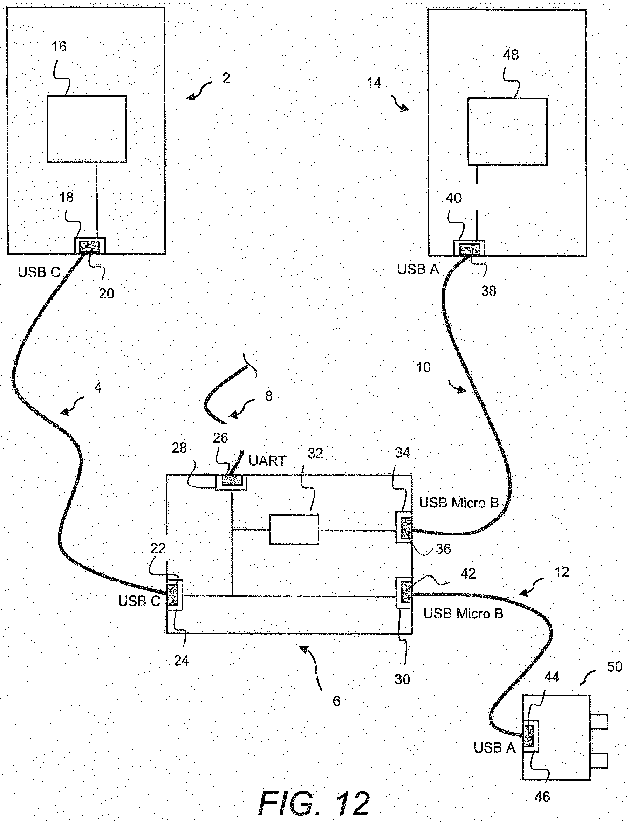

Figure 12 shows schematically an example of another system according to an embodiment. This system is identical to the system of Figure 1 except that the monitoring device 14 no longer comprises the USB A female connector 46. Instead, the USB A female connector 46 is integrated into a separate charging device 50 (e.g. a wall charger, a desktop computer, a laptop computer, etc.).

An advantage of the system shown in Figure 12 is that the charging device 50 may charge the end user device via data lines Data - and Data + of the USB cable 12 whilst the monitoring device 14 monitors UART logs via data lines Data - and Data + of the USB cable 10.

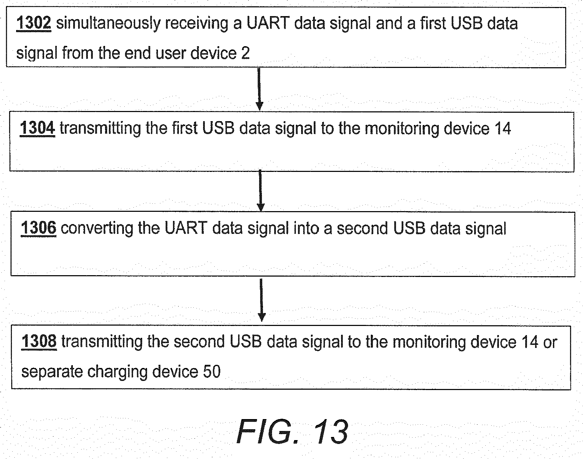

Figure 13 shows schematically an example of a flow diagram of an example of a method of operating the circuit 6.

In step 1302, the USB C female connector 24 of the circuit 6 receives a UART data signal from the end user device 2 via its SBU2 pin (which is used as a UART RxD pin). Simultaneously, the USB C female connector receives a USB data signal from the end user device via its Data + pin and Data - pin.

In step 1304, USB C female connector 24 of the circuit 6 transfers the USB data signal from its Data + pin and Data - to the Data + pin and Data - of the USB micro B female connector 30 of the circuit 6. The USB micro B connector 30 then transmits the USB data signal to the monitoring device 14 via the data lines Data - and Data + of USB cable 12.

In step 1306, the USB C female connector 24 of the circuit 6 transfers the UART data signal from its SBU2 pin (which is used as a UART RxD pin) to the RxD pin of the UART to USB bridge 32 of the circuit 6. The UART to USB bridge 32 converts the UART data signal into a USB data signal. The UART to USB bridge 32 transfers the converted USB data signal from its Data + pin and Data - pin to the Data + pin and Data - pin of the USB micro B female connector 34 of the circuit 6.

Also, the USB C female connector 24 of the circuit 6 transfers the UART data signal from its SBU2 pin (which is used as a UART RxD pin) to the RxD pin of the UART male connector 26 of the circuit 6.

In step 1308, the USB micro B female connector 36 transmits the converted USB data signal to the monitoring device 14 via the data lines Data - and Data + of USB cable 10.

Also, the UART male connector 26 transmits the UART data signal via the RxD line of UART cable 8.

It will also be understood that the type of USB connectors (A, B or C) or their shape (male or female) described in the previous embodiments is not limiting and could be changed without falling outside the scope defined by the claims.

It will also be understood that the processing units referred to herein may in practice be provided by a single chip or integrated circuit or plural chips or integrated circuits, optionally provided as a chipset, an application-specific integrated circuit (ASIC), field-programmable gate array (FPGA), digital signal processor (DSP), graphics processing units (GPUs), etc. The chip or chips may comprise circuitry (as well as possibly firmware) for embodying at least one or more of a data processor or processors, a digital signal processor or processors, baseband circuitry and radio frequency circuitry, which are configurable so as to operate in accordance with the exemplary embodiments. In this regard, the exemplary embodiments may be implemented at least in part by computer software stored in (non-transitory) memory and executable by the processor, or by hardware, or by a combination of tangibly stored software and hardware (and tangibly stored firmware).

The examples described herein are to be understood as illustrative examples of embodiments of the invention. Further embodiments and examples are envisaged. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. Furthermore, equivalents and modifications not described herein may also be employed within the scope of the invention, which is defined in the claims.

## Claims

1. A circuit for transmitting a Universal Asynchronous Receiver Transmitter, UART, data signal and a Universal Serial Bus, USB, data signal, the circuit comprising:
a first connector configured to simultaneously receive a UART data signal and a first USB signal data signal;
a second connector configured to transmit the first USB data signal;
a UART to USB bridge configured to convert the UART data signal into a second USB data signal; and
a third connector configured to transmit the second USB data signal.

2. A circuit according to claim 1, wherein the first connector of the circuit is a USB connector and comprises data pins for receiving the first USB data signal over data lines of a first USB cable and Side Band Use, SBU, pins for receiving UART data signal over SBU lines of the first USB cable.

3. A circuit according to claim 2, wherein the first connector of the circuit is a USB-C connector.

4. A circuit according to any one of claims 1 to 3, wherein the second connector of the circuit is a USB connector comprising data pins for transmitting the first USB data signal over data lines of a second USB cable.

5. A circuit according to claim 4, wherein the second connector of the circuit is a micro USB connector.

6. A circuit according to any one of claims 1 to 5, wherein the third connector of the circuit is a USB connector comprising data pins for transmitting the second USB data signal over data lines of a third USB cable.

7. A circuit according to claim 6, wherein the third connector of the circuit is a micro USB connector.

8. A circuit according to any one of claims 1 to 7, comprising:
a fourth connector configured to transmit the UART data signal.

9. A circuit according to claim 8, wherein the fourth connector of the circuit is a pin header UART connector comprising reception and transmission pins for transmitting the UART data signal over reception and transmission lines of a UART cable.

10. A system comprising:
a circuit for transmitting a Universal Asynchronous Receiver Transmitter, UART, data signal and a Universal Serial Bus, USB, data signal, the circuit comprising a first connector configured to simultaneously receive a UART data signal and a first USB data signal, a second connector configured to transmit the first USB data signal; a UART to USB bridge configured to convert the UART data signal into second USB data signal, and a third connector configured to transmit the second USB data signal;
a device comprising a processing unit configured to provide the UART data signal and the first USB data signal, and a first connector configured to simultaneously transmit the UART data signals and the first USB data signal; and
a cable connecting the first connector of the circuit to the first connector of the device.

11. A system according to claim 10, wherein the first connector of the circuit is a USB connector and comprises data pins for receiving the first USB data signal over data lines of the cable and Side Band Use, SBU, pins for receiving the UART signals over SBU lines of the cable ;
wherein the first connector of the device is a USB connector; and
wherein the cable is a USB cable.

12. A system according to claim 11, wherein the first connector of the circuit is a USB-C connector, the first connector of the device is a USB-C connector and the cable is a USB-C to USB-C cable.

13. A device, comprising:
a processing unit configured to provide a Universal Asynchronous Receiver Transmitter, UART, data signal and a first Universal Serial Bus, USB, data signal; and
a first connector configured to simultaneously transmit the UART data signal and the first USB data signal.

14. A device according to claim 13, wherein the device is a mobile phone, a tablet computer, a video game console, a Global Positioning System, a smart watch.

15. A method for transmitting a Universal Asynchronous Receiver Transmitter, UART, data signal and a Universal Serial Bus, USB, data signal, the method comprising:
simultaneously receiving a UART data signal and a first USB data signal;
transmitting the first USB data signal;
converting the UART data signal into second USB data signal; and
transmitting the second USB data signal.
